# FASCICULE DE BREVET EUROPEEN

(11) **EP 3 344 374 B1**
(45) Date de publication et mention de la délivrance du brevet: **10.08.2022**
(21) Numéro de dépôt: 16766247.7
(22) Date de dépôt: 02.09.2016
(51) Int. Cl.: B01D 61/00, B01D 67/00, B01D 71/02, F03G 7/00, H01M 8/22

(54) **DISPOSITIF DE PRODUCTION D'ÉNERGIE PAR GRADIENT DE SALINITÉ À TRAVERS DES MEMBRANES NANO-FLUIDIQUES À BASE D'OXYDE DE TITANE**
VORRICHTUNG ZUR ENERGIEERZEUGUNG ANHAND VON SALZKONZENTRATIONSGRADIENTEN DURCH NANOFLÜSSIGKEITSMEMBRANEN AUF TITANOXIDBASIS
DEVICE FOR PRODUCING ENERGY BY SALINITY GRADIENT THROUGH NANO-FLUID TITANIUM OXIDE MEMBRANES

(30) Priorité: 02.09.2015 EP 15306346
(43) Date de publication de la demande: 11.07.2018
(73) Titulaire: Sweetch Energy, 35000 Rennes (FR); Centre National de la Recherche Scientifique (CNRS), 75016 Paris (FR)
(72) Inventeur: MOTTET, Bruno, 56520 Guidel (FR); BOCQUET, Lydéric, 75014 Paris (FR); SIRIA, Alessandro, 75013 Paris (FR); BECHELANY, Mikhael, 34000 Montpellier (FR)
(74) Mandataire: Regimbeau
(86) Numéro de dépôt international: PCT/EP2016/070683
(87) Numéro de publication internationale: WO 2017/037213

(56) Documents cités:
- KANG BYEONG DONG ET AL: "Numerical study on energy harvesting from concentration gradient by reverse electrodialysis in anodic alumina nanopores", ENERGY, vol. 86, 16 mai 2015 (2015-05-16), pages 525-538, XP029225446, ISSN: 0360-5442, DOI: 10.1016/J.ENERGY.2015.04.056
- ALESSANDRO SIRIA ET AL: "Giant osmotic energy conversion measured in a single transmembrane boron nitride nanotube", NATURE, vol. 494, no. 7438, 27 février 2013 (2013-02-27), pages 455-458, XP055254216, United Kingdom ISSN: 0028-0836, DOI: 10.1038/nature11876 cité dans la demande
- KEH H J ET AL: "The effect of diffusioosmosis on water transport in polymer electrolyte fuel cells", JOURNAL OF POWER SOURCES, ELSEVIER SA, CH, vol. 180, no. 2, 2 mars 2008 (2008-03-02), pages 711-718, XP022633172, ISSN: 0378-7753, DOI: 10.1016/J.JPOWSOUR.2008.02.072 [extrait le 2008-03-02]

## Description

### Domaine technique

L'invention a pour objet un dispositif pour la production d'énergie électrique par gradient de salinité à travers une membrane nano-fluidique à base d'oxyde de titane. L'invention a également pour objet un procédé de production d'énergie utilisant un tel dispositif.

### Art antérieur

La production d'énergie par gradient de salinité est une des sources d'énergie renouvelable présentant le plus gros potentiel à l'échelle de la planète.

Quatre technologies distinctes sont actuellement envisagées pour récolter cette énergie « bleue » : la voie par pression osmotique retardée (PRO - Pressure Retarded Osmosis), la méthode d'électrodialyse inverse (RED- Reverse Electrodialysis), la technologie par systèmes capacitifs (Capmix) et la voie par membranes nanoporeuses de nitrure de bore.

La voie par pression osmotique retardée (PRO), telle que décrite dans les brevets US 3,906,250 et US 4,193,267, met en oeuvre des membranes dites semi-perméables laissant passer sélectivement les molécules d'eau afin de générer une surpression osmotique du côté de la solution la plus concentrée en sel. Cette surpression permet de faire tourner mécaniquement une hydro-turbine par l'écoulement ainsi généré, pour produire de l'électricité. La production d'énergie est indirectement liée au gradient de salinité, puisqu'elle se fait mécaniquement à travers une hydro-turbine.

Les membranes utilisées pour la PRO sont des membranes spécifiques dites semi-perméables. Ces membranes ne laissent passer que les molécules d'eau sans faire passer les ions provenant des sels dissous. Pour permettre cette sélectivité elles ont nécessairement une porosité maîtrisée avec des diamètres de pores de l'ordre de quelques angströms et sont généralement des membranes organiques à base de dérivés polyamides ou d'acétate de cellulose. Malgré de très nombreux travaux et de nombreuses recherches sur l'optimisation de ces membranes dédiées à la PRO, leur faible perméabilité, leur sensibilité à l'encrassement et les pertes énergétiques liées à la mise en oeuvre mécanique des turbines limitent la production d'énergie à quelques watts par m² de membrane. Actuellement, le coût de ces membranes ramené à la quantité d'énergie produite ralentie le développement de cette technologie.

L'électrodialyse inverse est une voie électrochimique basée sur le potentiel de Donnan à travers des membranes échangeuses d'ions dites « permsélectives ». Le dispositif est constitué d'une alternance de cellules dans lesquelles circulent la solution la plus concentrée en électrolyte et la solution la moins concentrée. Ces cellules sont séparées alternativement par des membranes échangeuses d'anions et des membranes échangeuses de cations. Aux extrémités de ces empilements de cellules sont positionnées des électrodes qui viennent récolter le courant électrique généré par le flux ionique global. Cependant, l'encrassement des membranes, l'accumulation de charges à la surface de ces membranes, leur faible perméabilité ainsi que la nécessité de les régénérer pénalisent le bilan économique global de cette technologie. La production d'énergie ramenée à la surface de membrane n'excède pas les quelques watts par m².

Une seconde voie électrochimique, basée sur l'alternance de charges et de décharge de systèmes capacitifs (système Capmix) est également étudiée. Il semble que l'optimisation des membranes capacitives reste toujours un point délicat pour cette voie électrochimique.

Récemment, une nouvelle voie sur la production d'énergie par gradient de salinité mettant en oeuvre des membranes nanoporeuses, à base de composés du type nitrure de bore ou plus généralement des composés à base de carbone, de bore et d'azote, a été découverte par Siria et al. (Giant osmotic energy conversion in a single transmembrane boron nitride nanotube - Nature - volume 494 - p455-458) (WO 2014/060690). Cette voie met en oeuvre des phénomènes de diffusio-osmose et permet de produire d'importantes quantités d'énergie par surface membranaire (de l'ordre du kW/m²). Cette voie nécessite, cependant, de réaliser des membranes à base de nitrure de bore déposé sur des supports d'alumine nanoporeuse. De telles membranes n'ont jamais été synthétisées au-delà de l'échelle laboratoire (Synthesis of Boron Nitride Nanotubes by a Template-Assisted Polymer Thermolysis Process, Bechelany et al., J. Phys. Chem. C 2007, 111, 13378 - 13384). Leur développement à plus grande échelle semble très complexe et extrêmement couteux compte-tenu des matériaux nécessaires.

Kang Byeong Dong et al, Numerical study on energy harvesting from concentration gradient by reverse electrodialysis in anodic alumina nanopores, vol.86, p.525-538, 2015, décrit des dispositifs comprenant des membranes à nanopores en alumine.

Il existe donc, au regard de ce qui précède, un besoin pour un procédé de production d'énergie électrique non polluant, facile à mettre en oeuvre, relativement économique et qui permet d'obtenir une production d'énergie par mètre carré de membrane qui soit de l'ordre du kW/m². Notamment, il existe un besoin pour un dispositif permettant de produire de l'énergie électrique par gradient de salinité qui ne présente pas les inconvénients, défauts, limitations et désavantages des procédé de production d'énergie électrique par gradient de salinité de l'art antérieur, notamment en ce qui concerne l'industrialisation et le coût de production de ces membranes.

La présente invention se propose d'apporter une solution efficace pour produire de l'énergie électrique par gradient de salinité en termes de puissance énergétique produite et de coût de production des membranes.

### Résumé de l'invention

Dans le cadre de la présente invention, les inventeurs ont découvert que l'utilisation d'une membrane comprenant des nano-canaux dont au moins une partie de leur surface interne est essentiellement constituée d'au moins un oxyde de titane, dans un dispositif de production d'énergie par gradient de salinité, permet d'obtenir une production d'énergie par mètre carré de membrane qui soit de l'ordre du kW/m², tout en réduisant le coût de production des membranes. En outre, l'utilisation de telles membranes permet également de faciliter le développement à plus grande échelle d'un dispositif de production d'énergie par gradient de salinité et d'en réduire le coût.

Dans un premier aspect, la présente invention concerne donc un dispositif pour la production d'énergie électrique comprenant :
a. un premier réservoir A (20A) destiné à recevoir une solution électrolytique de concentration C_{A} en un soluté (22A) et comprenant une électrode (30A) disposée de manière à entrer en contact avec la solution électrolytique de concentration C_{A};
b. un deuxième réservoir B (20B) destiné à recevoir une solution électrolytique de concentration C_{B} en un même soluté (22B), C_{B} étant inférieure à C_{A}, et comprenant une électrode (30B) disposée de manière à entrer en contact avec la solution électrolytique de concentration C_{B} ;
c. une membrane (10) séparant les deux réservoirs, ladite membrane comprenant au moins un nano-canal (11) agencé pour permettre la diffusion des électrolytes du réservoir A vers le réservoir B à travers le ou lesdits nano-canaux ; et
un dispositif (32) permettant de fournir l'énergie électrique générée, par le différentiel de potentiel existant entre les deux électrodes, caractérisé en ce qu'au moins une partie de la surface interne du ou des nano-canaux est essentiellement constituée d'au moins un oxyde de titane et en ce que les nano-canaux ont un diamètre moyen compris entre 1 et 500 nm permettant de laisser circuler tant le molécules d'eau que les ions du soluté.

L'invention concerne en outre un procédé de production d'énergie électrique utilisant un dispositif tel que décrit ci-dessus, comprenant les étapes suivantes :
i. fourniture d'un dispositif pour la production d'énergie électrique en suivant les étapes suivantes :
   - placer ladite solution électrolytique de concentration C_{A} en soluté (22A) dans le réservoir A (20A), de manière à ce que l'électrode (30A) dont il est équipé soit en contact avec ladite solution (22A),
   - placer ladite solution électrolytique de concentration C_{B} en un même soluté (22B), C_{B} étant inférieure à C_{A}, dans le réservoir B (20B), de manière à ce que l'électrode (30B) dont il est équipé soit en contact avec ladite solution (22B), et
   - séparer les deux réservoirs A et B par ladite membrane (10) comprenant au moins un nano-canal (11) agencé pour permettre la diffusion des électrolytes du réservoir A vers le réservoir B à travers le ou lesdits nano-canaux ;
ii. capter l'énergie électrique générée par le différentiel de potentiel existant entre les deux électrodes, à l'aide du dispositif (32).

### Description des Figures

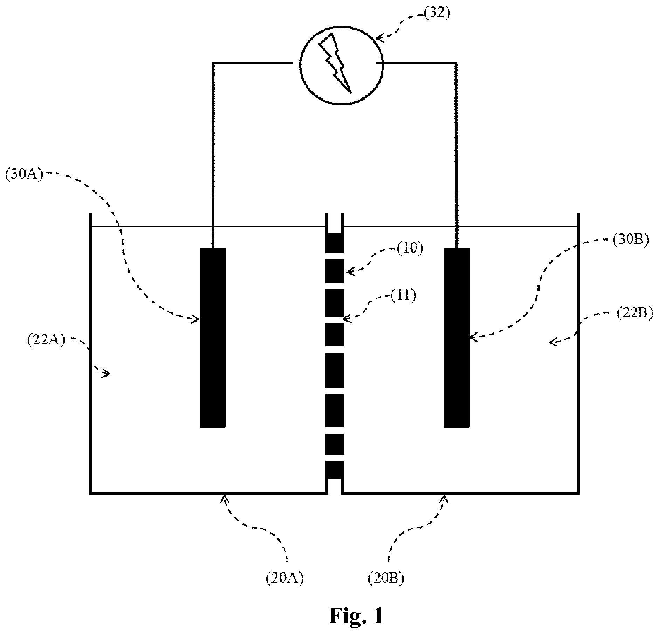

La **Figure 1** représente schématiquement un exemple de dispositif de production d'énergie électrique selon la présente invention, comprenant deux réservoirs 20A et 20B, respectivement réservoir A et réservoir B, séparés par une membrane 10. Chacun des deux réservoirs contient une solution électrolytique 22A et 22B de concentration respective C_{A} et C_{B} en un même soluté, dans laquelle trempe une électrode 30A et 30B. Les deux électrodes 30A et 30B sont reliées à un dispositif permettant de capter puis fournir l'énergie électrique générée.

Chaque réservoir A et B peut être tout dispositif ou environnement naturel, ouvert ou fermé, pouvant contenir un liquide.

Afin de générer un flux par diffusio-osmose, les concentrations C_{A} et C_{B} en un même soluté des solutions électrolytiques 22A et 22B sont nécessairement différentes. Dans le cadre de la présente invention, on considèrera arbitrairement que C_{B} est inférieure à C_{A}, ce qui entraine une circulation des ions du soluté du réservoir A vers le réservoir B.

La membrane 10, dite membrane « nano-fluidique », séparant les deux réservoirs A et B comprend au moins un nano-canal 11 agencé pour permettre la diffusion des électrolytes d'un réservoir à l'autre à travers le ou lesdits nano-canaux. Dans le cadre de la présente invention, la diffusion se fera du réservoir A au réservoir B. Le ou lesdits nano-canaux 11 ont une section moyenne permettant de laisser circuler tant les molécules d'eau que les ions du soluté. En outre, la morphologie de ces nano-canaux favorise une bonne diffusion de la solution à travers la membrane. Dans le cadre de la présente invention, au moins une partie de la surface interne du ou des nano-canaux est essentiellement constituée d'au moins un oxyde de titane (TiO₂).

Les électrodes 30A et 30B peuvent être partiellement ou entièrement plongées dans les solutions 22A et 22B. Il est également possible de prévoir que les électrodes se présentent sous la forme d'au moins une partie d'une paroi des réservoirs.

Le dispositif (32) permet de capter puis fournir l'énergie électrique spontanément générée par le différentiel de potentiel existant entre les deux électrodes 30A et 30B. Il peut être constitué de simples câbles reliant une batterie, une ampoule ou toute autre forme de consommateur électrique.

La **Figure 2** illustre le phénomène de diffusio-osmose d'une solution de NaCl à l'échelle d'un nano-canal chargé négativement en surface et générant un flux ioniquement déséquilibré sous l'influence de la charge de surface du matériaux à l'origine du courant électrique.

La **Figure 3** illustre le dispositif des exemples 1 et 2 permettant de mesurer le courant électrique et la puissance électrique générée par m² d'une membrane nanofluidique comprenant un nano-canal dont la surface interne est en TiO₂.

### Description détaillée de l'invention

La présente invention concerne un dispositif de production d'énergie électrique par gradient de salinité comprenant :
a. un premier réservoir A (20A) destiné à recevoir une solution électrolytique de concentration C_{A} en un soluté (22A) et comprenant une électrode (30A) disposée de manière à entrer en contact avec la solution électrolytique de concentration C_{A};
b. un deuxième réservoir B (20B) destiné à recevoir une solution électrolytique de concentration C_{B} en un même soluté (22B), C_{B} étant inférieure à C_{A}, et comprenant une électrode (30B) disposée de manière à entrer en contact avec la solution électrolytique de concentration C_{B} ;
c. une membrane (10) séparant les deux réservoirs, ladite membrane comprenant au moins un nano-canal (11) agencé pour permettre la diffusion des électrolytes du réservoir A vers le réservoir B à travers le ou lesdits nano-canaux ; et
d. un dispositif (32) permettant de fournir l'énergie électrique générée par le différentiel de potentiel existant entre les deux électrodes, caractérisé en ce qu'au moins une partie de la surface interne du ou des nano-canaux est essentiellement constituée d'au moins un oxyde de titane.

Ce dispositif est décrit de manière plus détaillée ci-dessous et dans la description de la Figure 1.

Dans le dispositif selon l'invention, l'énergie électrique est générée grâce à la différence des concentrations C_{A} et C_{B} en un même soluté des solutions électrolytiques qui provoque la mobilité des électrolytes par diffusio-osmose de la solution la plus concentrée vers la solution la moins concentrée, à travers les nano-canaux de la membrane et sous l'influence de leurs propriétés de surface.

Ainsi, un des points clés de la présente invention repose sur la nature, la morphologie et la densité des nano-canaux dans la membrane selon l'invention, notamment de la paroi interne desdits nano-canaux.

D'une part, le choix du matériau constituant la paroi interne des nano-canaux est crucial car, selon la nature du matériau et sa charge de surface en milieu aqueux, l'énergie générée sera plus ou moins importante. En effet, selon la nature du matériau de la paroi interne des nano-canaux, la solution électrolytique se déplaçant d'un réservoir à l'autre sera plus ou moins chargée électriquement, puisque déséquilibrée ioniquement sous l'influence de la charge de surface du matériau. Or, plus la solution électrolytique se déplaçant d'un réservoir à l'autre est déséquilibrée ioniquement et plus la différence de concentration est élevée entre les deux réservoirs, plus la production d'énergie est importante.

Dans le cadre de la présente invention, les inventeurs ont découvert que les nano-canaux dont la paroi interne est essentiellement constituée d'oxyde de titane engendrent un très fort déséquilibre ionique de la solution électrolytique circulant entre les deux réservoirs, et génère donc une énergie électrique particulièrement élevée entre les deux électrodes.

Par oxyde de titane, on entend tout type d'oxyde de titane métallique, à savoir l'oxyde de titane (II) de formule TiO ainsi que les formes non stechiométriques correspondantes de compositions comprises entre TiO_{0,7} et TiO_{1,3}, l'oxyde de titane (IV) ou dioxyde de titane, ainsi que leurs mélanges. Ces oxydes de titane peuvent se présenter sous différentes formes solides polymorphes, notamment sous forme amorphe ou encore sous forme cristalline. Dans le cas du dioxyde de titane (TiO₂) on utilisera principalement la forme cristalline de type rutile ou anatase, la forme anatase étant toutefois préférée.

Par au moins une partie de la surface interne des nano-canaux, on entend, au sens de la présente invention, que la surface interne des nano-canaux peut comprendre une ou plusieurs section(s) essentiellement constituée(s) d'un oxyde de titane ou que la totalité de la surface interne est essentiellement constituée d'au moins un oxyde de titane. Ladite ou lesdites sections peuvent être régulières ou irrégulières, intermittentes ou non-intermittentes et/ou sous forme d'une couche ou de multi-couches. De préférence, la surface interne totale des nano-canaux est essentiellement constituée d'au moins un oxyde de titane.

Par « essentiellement constituée d'oxyde de titane », on entend, au sens de la présente invention, constituée d'oxyde de titane et d'élément(s) minoritaire(s) tels que des impuretés.

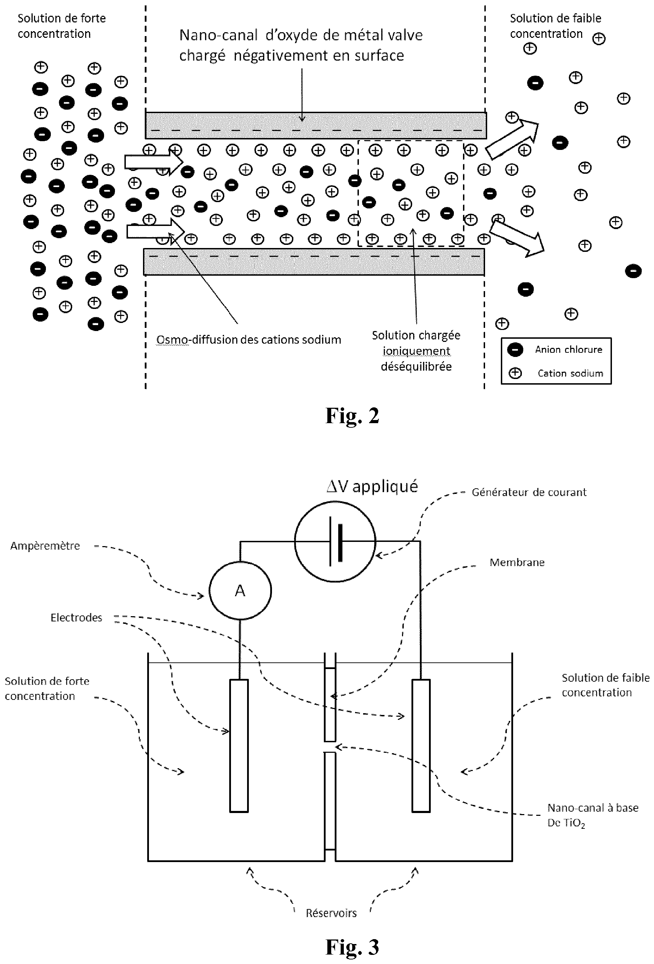

Sans vouloir se lier à une quelconque théorie, les inventeurs sont d'avis que compte tenu de leur nature, leur dimension et de leurs propriétés physico-chimiques, notamment leur densité de charge de surface de l'ordre de 0,1 à 1 C/cm², les nano-canaux d'oxyde de titane, notamment d'oxyde de titane, favorisent le passage des ions de charges opposées à leur charge de surface par un phénomène nanofluidique de diffusio-osmose généré par le gradient de salinité. La Figure 2 illustre en section longitudinale, le phénomène de diffusio-osmose à l'échelle d'un nano-canal. En particulier, elle représente le mouvement différencié des cations Na⁺ et anions Cl⁻ d'une solution de NaCl concentrée vers une solution de NaCl diluée à la surface chargée négativement d'un nano-canal de TiO₂. Sans être toutefois parfaitement sélectifs vis-à-vis des ions, ni des molécules d'eau, comparativement aux membranes de l'art antérieur notamment PRO et RED, la membrane selon l'invention va créer un flux ionique globalement chargé électriquement puisque déséquilibré entre les anions et les cations sous l'effet des charges de surface.

Dans un mode de réalisation préféré, au moins une partie de la surface interne des nano-canaux est essentiellement constituée d'un oxyde de titane, en particulier sous forme de TiO₂.

Avantageusement, les nano-canaux sont entièrement constitué d'oxyde de titane,.

Les propriétés physico-chimiques de l'oxyde detitane, peuvent généralement être modulées et amplifiées par dopage ou fonctionnalisation, c'est-à-dire par introduction, en surface ou au coeur du réseau du titane, d'éléments chimiques métalliques tels que le fer, l'argent, le vanadium, l'or, le platine, le niobium, le tungstène ou non métalliques tels que l'azote, le souffre, le carbone, l'hydrogène, le bore, le phosphore ou de différents composés chimiques de la famille des silanes, amines ou autres organiques, de préférence en faibles quantités, telles que de l'ordre de quelques pourcents en masse.

Dans un mode de réalisation préféré de l'invention, l'oxyde de titane est dopé par introduction, en surface ou au coeur de son réseau cristallin, d'éléments chimiques métalliques tels que le fer, l'argent, le vanadium, l'or, le platine, le niobium, le tungstène, ou non métalliques tels que l'azote, le souffre, le carbone, l'hydrogène, le bore, le phosphore, ou de différents composés chimiques tels que les silanes ou aminés, de préférence en une quantité comprise entre 0,5 et 10% en masse et plus préférentiellement entre 1 et 5% en masse.

Le choix du matériau constituant la paroi interne des nano-canaux influence également l'industrialisation des membranes selon l'invention. En effet, les membranes comprenant des nano-canaux à base de titane, sont relativement aisées à produire et peu couteuse, comparativement aux membranes de nitrure de bore ou à base de carbone, de bore et d'azote décrites dans l'art antérieur. En effet, une membrane comprenant des nano-canaux dont la surface interne est constituée essentiellement d'oxyde de titane, peut être obtenue directement par anodisation d'une feuille de titane (*cf.* Progress on free-standing and flow-through TiO2 nanotubes membranes, Guohua Lin, Kaiying Wang, Nils Hoivik, Henrik Jakobsen, Solar Energy Materials & Solar Cells, 98, 2012, pp24-38 *;* TiO2 nanotubes synthesis and applications, Poulomi Roy, Steffen Berger, Patrick Schmuki, Angewandte Chemistry Int. Ed., 50, 2011, pp 2904-2939*).* D'autres techniques, telles que la voie sol-gel en présence de copolymères à blocs, ou de copolymères greffés, permettent également de synthétiser des membranes de TiO₂ avec des nano-canaux réguliers et orientés *(cf.* Jung Tae Park, Won Seok Chi, Sang Jin Kim, Daeyeon Lee & Jong Hak Kim, Scientific Reports 4 :5505*,* Nature, 2014*).* Cette méthode permet également de moduler les paramètres morphologiques, longueur, largeur et asymétrie des nano-canaux traversants. En outre, la technologie des poudres et le frittage peuvent être utilisés pour obtenir de très fines membranes d'oxyde de titane des nano-canaux traversants réguliers et maîtrisés. De telles membranes peuvent également être obtenues par différentes techniques de dépôt de TiO₂ par CVD (dépôt chimique en phase vapeur), ALD (Atomic Layer Déposition) ou HiPIMS (pulvérisation cathodique magnétron pulsé à haute puissance [*High Power Impulse Magnetron Sputtering*])*,* par exemple, sur des supports nanoporeux à la morphologie préformée.

Lesdites membranes peuvent également être supportées par un support mécanique nanoporeux ou percé sur lequel le titane est déposé. Par exemple, lesdites membranes peuvent être composées d'une membrane polymère souple sur laquelle est déposée une couche de TiO₂.

D'autre part, la morphologie des nano-canaux influence également le rendement en énergie électrique générée. En effet, la section moyenne des nano-canaux ainsi que leur morphologie traversante spécifique et régulière favorisent la bonne diffusion de la solution à travers la membrane. Ainsi, la membrane selon l'invention se distingue nettement des membranes semi-perméables ou échangeuses d'ions de l'art antérieure, par ses nano-canaux laissant potentiellement circuler tant les molécules d'eaux que les ions, puisque chacun des nano-canaux possède une section supérieure à la taille de ces molécules.

Dans le cadre de la présente invention, les nano-canaux ont un diamètre moyen compris entre 1 et 500 nm, en particulier entre 10 et 100 nm.

Par « diamètre moyen » on entend, dans le cadre de la présente invention, le diamètre moyen interne du nano-canal. Le nano-canal peut avoir une morphologie nanotubulaire, asymétrique de type conique, en goulot, ou avec culot perforé. Lorsque le nano-canal a une morphologie nanotubulaire, c'est-à-dire avec une section circulaire, le diamètre moyen correspond au diamètre interne de la section circulaire. Lorsque le nano-canal a une morphologie asymétrique de type conique, en goulot, ou avec culot perforé, ou a une section ovale ou irrégulière, le diamètre moyen correspond à la moyenne du plus petit et du plus grand diamètre interne. Le diamètre moyen des nano-canaux se mesure par des moyens connus de l'homme du métier. Par exemple, le diamètre moyen peut être mesuré par microscopie électronique à balayage ou microscopie électronique à transmission. De manière avantageuse, les nano-canaux présents sur la membrane présentent des diamètres homogènes. Lorsque, sur une même membrane, les nano-canaux ne présentent pas tous des diamètres homogènes, le diamètre moyen correspondra à la moyenne des diamètres moyens de l'ensemble des nano-canaux.

Avantageusement, dans le cadre de la présente invention, les nano-canaux ont une morphologie nanotubulaire, asymétrique de type conique, en goulot, ou avec culot perforé, de préférence les dits nano-canaux ont une morphologie asymétrique de type conique. Lorsque les nano-canaux ont une morphologie asymétrique de type conique, en goulot, ou avec culot perforé, le diamètre le plus fin des nano-canaux est alors orienté du côté du réservoir contenant la solution la moins concentrée en solutés dissous, c'est-à-dire, dans notre cas, vers le réservoir B.

De manière préférée, lesdits nano-canaux présentent un rapport longueur sur diamètre moyen inférieur à 1000, en particulier inférieur à 100. La longueur des nano-canaux se mesure également par des moyens connus de l'homme du métier ; par exemple, par microscopie électronique à balayage ou microscopie électronique à transmission.

Dans un mode de réalisation préféré de l'invention, la densité de nano-canaux par unité de surface de membrane est supérieure à 10⁵ nano-canaux par cm² de membrane, en particulier supérieure à 10⁸ nano-canaux par cm² de membrane. La densité de nano-canaux par unité de surface de membrane se mesure par des moyens connus de l'homme du métier, tels que par microscopie électronique à balayage ou microscopie ionique à balayage. Plus la densité de nano-canaux par unité de surface de membrane est élevée, plus le rendement en énergie électrique générée par unité de surface de membrane est important

Dans un mode de réalisation particulier, les réservoirs A et B du dispositif selon l'invention contiennent chacun une solution électrolytique (22A et 22B) de concentration respective C_{A} et C_{B} en un même soluté, C_{B} étant inférieure à C_{A}.

En disposant dans les deux réservoirs A et B des solutions électrolytiques de concentrations différentes, un flux osmotique est généré entre les deux réservoirs par diffusio-osmose, sans qu'aucune pression osmotique n'apparaisse. Dans un autre mode de réalisation, le gradient de concentration pourrait également être obtenu par gradient de température entre les deux réservoirs en jouant sur la solubilité du sel en fonction de la température.

Dans le cadre de la présente invention, le ratio de concentration Rc (Rc étant égal au rapport de la concentration de la solution la plus concentrée/la concentration de la solution la moins concentrée) pourra être compris entre 1 et 10⁹. De préférence, le ratio de concentration C_{A}/C_{B} est supérieur à 1 et inférieur ou égal à 10⁹, avantageusement supérieur à 10 et inférieur ou égal à 10⁵.

Les solutions électrolytiques sont des solutions aqueuses comprenant des électrolytes. Les électrolytes pourront être de toute nature chimique dans la mesure où ils se dissolvent dans la solution sous forme d'ions chargés. Préférentiellement, ces ions proviendront de sels dissous tels que NaCl, KCL, CaCl₂ et MgCl₂. Les solutions électrolytiques peuvent être des solutions synthétiques ; des solutions naturelles, telles que des eaux douces provenant des lacs ou des rivières, des eaux sous-terraines, des eaux saumâtres, de l'eau de mer ; des eaux de production industrielle, des eaux de production pétrolière ou des solutions biologiques.

De manière préférée, lesdites solutions électrolytiques sont des solutions aqueuses comprenant un soluté choisi parmi les halogénures alcalins ou les halogénures alcalino-terreux, de préférence choisi parmi NaCl, KCL, CaCl₂ et MgCl₂, de manière davantage préféré le soluté est le NaCl.

Pour améliorer le flux osmotique généré de part et d'autre de la membrane de nano-canaux à base d'oxyde de titane, , le pH des solutions est ajusté en fonction du point isoélectrique de la surface interne des nano-canaux. Pour obtenir une charge négative en surface interne des nano-canaux, le pH des solutions pourra être ajusté à une valeur comprise entre (pHᵢₛₒ +1) et 14, plus favorablement entre les valeurs (pHᵢₛₒ+2) et 12. Pour obtenir une charge positive en surface interne des nano-canaux, le pH des solutions pourra être ajusté à une valeur comprise entre 0 et (pHᵢₛₒ-1) plus favorablement entre 1 et (pHᵢₛₒ-2).

Dans le cadre de la présente invention, on entend par pHᵢₛₒ, le pH du point isoélectrique du matériau constituant la surface interne des nano-canaux. Le pHᵢₛₒ se mesure par des méthodes connues de l'homme du métier, notamment par la méthode de titration potentiométrique acide/base

Plus favorablement encore, pour accroître l'asymétrie du dispositif et amplifier la quantité d'énergie électrique produite par le dispositif, un gradient de pH pourra également être établi entre les deux réservoirs, la différence de pH entre les deux solutions sera supérieure à 1, préférentiellement supérieure à 2.

Chacun des réservoirs A et B du dispositif selon l'invention comprend également une électrode (30A et 30B) disposée de manière à entrer en contact avec la solution électrolytique (22A et 22B). Différents types d'électrodes pourront être utilisés pour la récupération du potentiel ou courant électrique développé entre les deux réservoirs. Tous types d'électrodes capables de collecter le flux de ion Na⁺ou Cl⁻pourront être utilisés, et de préférence les électrodes composés d'Argent et Chlorure d'Argent (Ag/AgCl), de Carbone et Platine (C/Pt-), de Carbone (C-), de Graphite ou encore de complexes de Fer du type [Fe(CN)6]⁴⁻/[Fe(CN)6]³⁻.

Les électrodes peuvent être partiellement ou entièrement plongées dans les solutions électrolytiques. Il pourrait également être prévu que les électrodes se présentent sous la forme d'au moins une partie d'une paroi des réservoirs. Ces électrodes sont reliées ensemble à un dispositif (32) permettant de capter puis fournir l'énergie électrique spontanément générée par le différentiel de potentiel existant entre elles. Ces électrodes peuvent notamment être reliées par de simples câbles reliant une batterie, une ampoule ou toute autre forme de consommateur électrique.

Le dispositif ainsi décrit permet de récolter l'énergie électrique résultant du flux ionique chargé traversant la membrane nano-fluidique.

Dans un mode particulier de l'invention, il pourrait être prévu que le dispositif comprenne N réservoirs (20) et N-1 membranes (10), N étant un nombre entier, notamment compris entre 3 et 100, en particulier compris entre 3 et 50 Dans ce dispositif, les réservoirs et les membranes sont tels que définis ci-dessus. L'ensemble sera donc constitué d'une alternance de réservoirs contenant alternativement une solution électrolytique concentrée et une solution électrolytique moins concentrée, séparés entre eux par des membranes.

Dans un deuxième aspect, la présente invention concerne un procédé de production d'énergie électrique utilisant un dispositif tel que décrit ci-dessus, comprenant les étapes suivantes :
i. fourniture d'un dispositif pour la production d'énergie électrique en suivant les étapes suivantes :
   - placer ladite solution électrolytique de concentration C_{A} en soluté (22A) dans le réservoir A (20A), de manière à ce que l'électrode (30A) dont il est équipé soit en contact avec ladite solution (22A),
   - placer ladite solution électrolytique de concentration C_{B} en un même soluté (22B), C_{B} étant inférieure à C_{A}, dans le réservoir B (20B), de manière à ce que l'électrode (30B) dont il est équipé soit en contact avec ladite solution (22B), et
   - séparer les deux réservoirs A et B par ladite membrane (10) comprenant au moins un nano-canal (11) agencé pour permettre la diffusion des électrolytes du réservoir A vers le réservoir B à travers le ou lesdits nano-canaux ;
ii. capter l'énergie électrique générée par le différentiel de potentiel existant entre les deux électrodes, à l'aide du dispositif (32).

Ces différentes étapes seront facilement réalisables par l'homme du métier, en utilisant ses connaissances générales.

Les exemples qui suivent visent à illustrer la présente invention.

### EXEMPLES

### Exemple 1: Préparation d'un dispositif selon l'invention comprenant une membrane nano-fluidique à base d'oxyde de titane amorphe - Mesure du courant électrique obtenu

### 1- préparation de la membrane nano-fluidique à base d'oxyde de titane amorphe

La membrane nano-fluidique à base d'oxyde de titane amorphe a été obtenue à 130°C en utilisant la méthode ALD (Atomic Layer déposition) par dépôt d'une épaisseur de 5 nm de TiO₂ : de l'oxyde de titane amorphe a été ainsi déposé sur un support nanotubulaire en nano-mélaminé comprenant un nano-canal et constitué de 16 bi-couches de Al₂O₃ et ZnO sur SiN pour obtenir une bonne accroche et un bon état de surface préalablement perforé au diamètre voulu de 110 nm .

La membrane ainsi obtenue comprend un nano-canal à base d'oxyde de titane amorphe, avec un diamètre interne de 100 nanomètres et une longueur de 200 nanomètres.

Le point iso-électrique de la membrane a été identifié à un pH de l'ordre de 6,5.

### 2- préparation du dispositif selon l'invention

Ce dispositif est constitué de deux réservoirs indépendants contenant chacun une solution de chlorure de potassium (KCl) dissous à différentes concentrations comprises entre 1 mM et 1M permettant de définir le gradient de concentrations Rc de 1, 10, 100 et 1000 entre les deux réservoirs.

Les deux réservoirs sont séparés par la membrane nano-tubulaire à base d'oxyde de titane amorphe obtenue à l'étape 1.

Des électrodes Ag/AgCl sont utilisées pour mesurer le courant électrique produit à travers la membrane nano-tubulaire à base d'oxyde de titane.

Pour effectuer les mesures de courant et de conductance un ampèremètre et un générateur de courant permettant d'imposer une différence de potentiel sont positionnés en série entre les deux électrodes.

La Figure 3 représente ce dispositif.

### 3- Mesures du courant osmotique, de la conductance et de la puissance maximale obtenue

Différentes mesures de courant osmotique, Iₒₛₘ, produit par la membrane et correspondant au courant mesuré sur l'ampèremètre sous une différence de potentielle nulle, duquel est déduit le courant d'oxydoréduction propre aux deux électrodes, ont ainsi été réalisées avec différents gradients de salinité Rc de 1, 10, 100 et 1000 exprimés en ratio et pour des pH de solution de 9,5 puis de 10,5 afin d'avoir une charge de surface négative importante à la surface de l'oxyde de titane.

Les résultats de ces mesures sont présentés dans le tableau 1.

**Tableau 1 : Iₒₛₘ moyen du nanotube en nA**

| Ratio de concentration | Iₒₛₘ moyen (nA) à pH = 9,5 | Iₒₛₘ moyen (nA) à pH=10,5 |
|---|---|---|
| 10 | 0,8 | 1,4 |
| 100 | 1,3 | 1,8 |
| 1000 | 1,7 | 3,3 |

Les mesures de conductance G de la membrane ont également été réalisées sous les mêmes gradients de concentration. Ces valeurs ont été obtenues par mesure du courant I sur l'ampèremètre pour des différences de potentiel ΔV imposées suivant la loie d'Ohm G = I/(ΔV). Les valeurs sont données dans le tableau 2.

**Tableau 2: Conductance moyenne du nanotube en nS**

| Ratio de concentration | G (nS) à pH=9,5 | G (nS) à pH=10,5 |
|---|---|---|
| 10 | 140 | 200 |
| 100 | 90 | 150 |
| 1000 | 70 | 110 |

La puissance maximale moyenne Pmax générée par le nanotube est ensuite calculée suivant la formule Pmax= I_{osm²}/4G.

A l'échelle d'un mètre carré de membrane contenant 6,9.10⁹ nano-canaux au cm² (D=100 nm, interpores = 20 nm), les puissances maximale d'énergie produite par m² pour chaque gradient de concentration et pH sont extrapolées arithmétiquement dans le tableau 3.

**Tableau 3 : Pmax/m² de membrane nanofluidique (pour une densité de 6,9.10⁹ nano-canaux par cm²) en Watt**

| Ratio de concentration | Pmax /m² (W) à pH = 9,5 | Pmax /m² (W) à pH=10,5 |
|---|---|---|
| 10 | 78 | 169 |
| 100 | 324 | 372 |
| 1000 | 712 | 1 707 |

Les puissances électriques produites par unité de surface avec un tel dispositif mettant en oeuvre des membranes nanofuidiques à base de TiO₂ dépassent de plusieurs ordres de grandeur les puissances électriques produites de l'art antérieur.

### Exemple 2: Préparation d'un dispositif selon l'invention comprenant une membrane nano-fluidique à base d'oxyde de titane sous forme anatase - Mesure du courant électrique obtenu

### 1- préparation de la membrane nano-fluidique à base d'oxyde de titane sous forme anatase

La membrane nano-fluidique à base d'oxyde de titane amorphe a été obtenue à 130°C en utilisant la méthode ALD (Atomic Layer déposition) par dépôt d'une épaisseur de 5 nm de TiO₂: de l'oxyde de titane amorphe a été ainsi déposé sur un support nanotubulaire en nano-mélaminé comprenant un nano-canal et constitué de 16 bi-couches de Al₂O₃ et ZnO sur SiN pour obtenir une bonne accroche et un bon état de surface préalablement perforé au diamètre voulu de 110 nm .

La membrane ainsi obtenue a été recuite à 500°C pendant 2 heures sous air pour cristalliser l'oxyde titane sous sa forme anatase.

Cette membrane comprend alors un nano-canal à base d'oxyde de titane sous forme anatase de morphologie nanotubulaire, avec un diamètre interne de 100 nanomètres et une longueur de 200 nanomètres.

Le point iso-électrique de la membrane a été identifié à un pH de l'ordre de 4.

### 2- préparation du dispositif selon l'invention

Le dispositif utilisé est en tout point semblable au dispositif de l'exemple 1 en utilisant la membrane nano-fluidique à base d'oxyde de titane sous forme anatase.

### 3- Mesures du courant osmotique, de la conductance et de la puissance maximale obtenue

Différentes mesures de courant osmotique, Iₒₛₘ, réalisées dans les mêmes conditions que l'exemple 1, correspondant au courant produit par la membrane ont ainsi été réalisées sous différents gradients de salinité Rc de 1, 10, 100 et 1000 exprimés en ratio et pour des pH de solution de 8 puis de 10,5 afin d'avoir une charge de surface négative importante à la surface de l'oxyde de titane.

Les résultats des mesures sont présentés dans le tableau 4.

**Tableau 4 : Iₒₛₘ moyen du nanotube en nA**

| Ratio de concentration | Iₒₛₘ moyen (nA) à pH = 8 | Iₒₛₘ moyen (nA) à pH=10,5 |
|---|---|---|
| 10 | 1,8 | 2,5 |
| 100 | 3,0 | 4,1 |
| 1000 | 3,7 | 4,0 |

Les mesures de conductance G de la membrane sont données dans le tableau 5.

**Tableau 5: Conductance moyenne du nanotube en nS**

| Ratio de concentration | G (nS) à pH=8 | G (nS) à pH=10,5 |
|---|---|---|
| 10 | 70 | 73 |
| 100 | 50 | 55 |
| 1000 | 45 | 50 |

La puissance maximale moyenne Pmax générée par chaque nanotube est ensuite calculée suivant la formule Pmax= I_{osm²}/4G. A l'échelle d'un mètre carré de membrane contenant 6,9.10⁹ pores au cm² (D=100 nm, interpores = 20 nm), les puissances maximale d'énergie produite par m² pour chaque gradient de concentration et pH sont présentées dans le tableau 6.

**Tableau 6 : Pmax lm² de membrane nanofluidique en Watt**

| Ratio de concentration | Pmax /m² (W) à pH = 8 | Pmax /m² (W) à pH=10,5 |
|---|---|---|
| 10 | 798 | 1476 |
| 100 | 3105 | 5272 |
| 1000 | 5247 | 5520 |

Les puissances mesurées sont là encore nettement supérieures à l'état de l'art pour atteindre des valeurs dépassant les 5 kW/m².

A titre de comparaison, on mentionnera la publication de Byeong Dong Kang, Hyun Jung Kim, Moon Gu Lee, Dong-Kwon Kim « Numerical study on energy harvesting from concentration gradient by reverse electrodialysis in anodic alumina nanopores » (Energy vol. 86, 16 mai 2015, pages 525-538, ISSN : 0360-5442).

Les travaux menés avec une membrane comportant des nanopores d'aluminium (Al₂O₃) annoncent une puissance de 9,9W/m2, c'est-à-dire inférieure à plus de deux ordres de grandeurs aux puissances électriques produites selon l'invention avec des membranes nanofluidiques à base de TiO₂.

## Revendications

1. Dispositif pour la production d'énergie électrique comprenant :
a. un premier réservoir A (20A) destiné à recevoir une solution électrolytique de concentration CA en un soluté (22A) et comprenant une électrode (30A) disposée de manière à entrer en contact avec la solution électrolytique de concentration CA ;
b. un deuxième réservoir B (20B) destiné à recevoir une solution électrolytique de concentration CB en un même soluté (22B), CB étant inférieure à CA, et comprenant une électrode (30B) disposée de manière à entrer en contact avec la solution électrolytique de concentration CB ;
c. une membrane (10) séparant les deux réservoirs, ladite membrane comprenant au moins un nano-canal (11) agencé pour permettre la diffusion des électrolytes du réservoir A vers le réservoir B à travers le ou lesdits nano-canaux ; et
d. un dispositif (32) permettant de fournir l'énergie électrique générée par le différentiel de potentiel existant entre les deux électrodes,
**caractérisé en ce qu'**au moins une partie de la surface interne du ou des nano-canaux est essentiellement constituée d'au moins un oxyde de titane et **caractérisé en ce que** les nano-canaux ont un diamètre moyen compris entre 1 et 500 nm permettant de laisser circuler tant les molécules d'eau que les ions du soluté.

2. Dispositif selon la revendication 1, **caractérisé en ce que** ledit oxyde de titane est le dioxyde de titane (TiO₂).

3. Dispositif selon la revendication 1 ou 2, **caractérisé en ce que** l'oxyde de titane est sous une forme amorphe, sous la forme cristalline anatase, sous la forme cristalline type rutile ou sous forme d'un mélange de ces formes, de préférence l'oxyde de titane est sous la forme cristalline anatase.

4. Dispositif selon l'une quelconque des revendications 1 à 3, **caractérisé en ce que** l'oxyde de titane, est dopé par introduction, en surface ou au coeur de son réseau cristallin, d'éléments chimiques métalliques tels que le fer, l'argent, le vanadium, l'or, le platine, le tungstène, le niobium ou non métalliques tels que l'azote, le souffre, le carbone, l'hydrogène, le bore, le phosphore, ou de différents composés chimiques tels que les silanes ou aminés.

5. Dispositif selon l'une quelconque des revendications 1 à 4, **caractérisé en ce que** lesdits nano-canaux ont un diamètre moyen compris entre 10 et 100 nm.

6. Dispositif selon l'une quelconque des revendications 1 à 5, **caractérisé en ce que** lesdits nano-canaux présentent un rapport longueur sur diamètre moyen inférieur à 1000, en particulier inférieur à 100.

7. Dispositif selon l'une quelconque des revendications 1 à 6, **caractérisé en ce que** la densité de nano-canaux par unité de surface de membrane est supérieure à 10⁵ nano-canaux par cm² de membrane, en particulier supérieure à 10⁸ nano-canaux par cm² de membrane.

8. Dispositif selon l'une quelconque des revendications 1 à 7, **caractérisé en ce que** lesdits nano-canaux ont une morphologie nanotubulaire, asymétrique de type conique, en goulot, ou avec culot perforé, de préférence lesdits nano-canaux ont une morphologie asymétrique de type conique.

9. Procédé de production d'énergie électrique utilisant un dispositif tel que décrit dans l'une quelconque des revendications 1 à 8, comprenant les étapes suivantes :
i. fourniture d'un dispositif pour la production d'énergie électrique en suivant les étapes suivantes :
- placer ladite solution électrolytique de concentration CA en soluté (22A) dans le réservoir A (20A), de manière à ce que l'électrode (30A) dont il est équipé soit en contact avec ladite solution (22A),
- placer ladite solution électrolytique de concentration CB en un même soluté (22B), CB étant inférieure à CA, dans le réservoir B (20B), de manière à ce que l'électrode (30B) dont il est équipé soit en contact avec ladite solution (22B), et
- séparer les deux réservoirs A et B par ladite membrane (10) comprenant l'au moins un nano-canal (11) agencé pour permettre la diffusion des électrolytes du réservoir A vers le réservoir B à travers le ou lesdits nano-canaux ;
ii. capter l'énergie électrique générée par le différentiel de potentiel existant entre les deux électrodes, à l'aide du dispositif (32).

10. Procédé selon la revendication 9, **caractérisé en ce que** lesdites solutions électrolytiques sont des solutions aqueuses comprenant un soluté choisi parmi les halogénures alcalins ou les halogénures alcalino-terreux, de préférence choisi parmi NaCl, KCL, CaCl₂ et MgCl₂.

11. Procédé selon la revendication 10, **caractérisé en ce que** ledit soluté est le NaCl.

12. Procédé selon l'une quelconques des revendications 9 à 11, **caractérisé en ce que** le ratio de concentration CA/CB est supérieur à 1 et inférieur ou égal à 10⁹, de préférence supérieur à 1 et inférieur ou égal à 10⁵.

13. Procédé selon l'une quelconque des revendications 9 à 12, **caractérisé en ce que** le pH desdites solutions électrolytiques est compris entre (pHiso +1) et 14, en particulier entre (pHiso+2) et 12, pHiso étant le pH du point isoélectrique de ladite membrane.

14. Procédé selon l'une quelconque des revendications 9 à 12, **caractérisé en ce que** le pH desdites solutions électrolytiques est compris entre 0 et (pHiso-1), en particulier entre 1 et (pHiso-2), pHiso étant le pH du point isoélectrique de ladite membrane.

15. Procédé selon l'une quelconque des revendications 9 à 14, **caractérisé en ce que** la différence de pH entre les deux solutions électrolytiques contenues dans les réservoirs est supérieure à 1, en particulier supérieure à 2.

## Patentansprüche

1. Vorrichtung zur Produktion von elektrischer Energie, umfassend:
a. ein erstes Reservoir A (20A), das dazu vorgesehen ist, eine Elektrolytlösung mit einer Konzentration CA eines gelösten Stoffs (22A) aufzunehmen, und umfassend eine Elektrode (30A), die so angeordnet ist, dass sie mit der Elektrolytlösung mit der Konzentration CA in Kontakt gelangt;
b. ein zweites Reservoir B (20B), das dazu vorgesehen ist, eine Elektrolytlösung mit einer Konzentration CB desselben gelösten Stoffs (22B) aufzunehmen, wobei CB niedriger als CA ist, und umfassend eine Elektrode (30B), die so angeordnet ist, dass sie mit der Elektrolytlösung mit der Konzentration CB in Kontakt gelangt;
c. eine Membran (10), die die zwei Reservoirs trennt, wobei die Membran mindestens einen Nanokanal (11) umfasst, der dazu eingerichtet ist, die Diffusion von Elektrolyten vom Reservoir A zum Reservoir B durch den oder die Nanokanäle zu ermöglichen; und
d. eine Vorrichtung (32), die das Liefern der elektrischen Energie, die durch die Potentialdifferenz erzeugt wird, die zwischen den zwei Elektroden existiert, ermöglicht,
**dadurch gekennzeichnet, dass** mindestens ein Teil der inneren Oberfläche des oder der Nanokanäle im Wesentlichen aus mindestens einem Titanoxid besteht und **dadurch gekennzeichnet, dass** die Nanokanäle einen mittleren Durchmesser aufweisen, der zwischen 1 und 500 nm liegt, was ermöglicht, sowohl die Wassermoleküle als auch die Ionen des gelösten Stoffs zirkulieren zu lassen.

2. Vorrichtung nach Anspruch 1, **dadurch gekennzeichnet, dass** das Titanoxid Titandioxid (TiO₂) ist.

3. Vorrichtung nach Anspruch 1 oder 2, **dadurch gekennzeichnet, dass** das Titanoxid in einer amorphen Form, in der kristallinen Anatasform, in der kristallinen Form vom Rutil-Typ oder in der Form einer Mischung dieser Formen ist, vorzugsweise wobei das Titanoxid in der kristallinen Anatasform ist.

4. Vorrichtung nach einem der Ansprüche 1 bis 3, **dadurch gekennzeichnet, dass** das Titanoxid durch Einbringen von metallischen chemischen Elementen, wie Eisen, Silber, Vanadium, Gold, Platin, Wolfram, Niob, oder nichtmetallischen chemischen Elementen, wie Stickstoff, Schwefel, Kohlenstoff, Wasserstoff, Bor, Phosphor, oder anderen chemischen Verbindungen, wie Silane oder Amine, auf der Oberfläche oder im Kern seines kristallinen Netzwerks dotiert ist.

5. Vorrichtung nach einem der Ansprüche 1 bis 4, **dadurch gekennzeichnet, dass** die Nanokanäle einen mittleren Durchmesser aufweisen, der zwischen 10 und 100 nm liegt.

6. Vorrichtung nach einem der Ansprüche 1 bis 5, **dadurch gekennzeichnet, dass** die Nanokanäle ein Verhältnis von Länge zu mittlerem Durchmesser aufweisen, das kleiner als 1000, insbesondere kleiner als 100 ist.

7. Vorrichtung nach einem der Ansprüche 1 bis 6, **dadurch gekennzeichnet, dass** die Dichte der Nanokanäle pro Oberflächeneinheit der Membran größer als 10⁵ Nanokanäle pro cm² der Membran, insbesondere größer als 10⁸ Nanokanäle pro cm² der Membran ist.

8. Vorrichtung nach einem der Ansprüche 1 bis 7, **dadurch gekennzeichnet, dass** die Nanokanäle eine Nanoröhrenmorphologie, asymmetrische Morphologie vom konischen Typ, Flaschenhalsmorphologie oder Morphologie mit perforiertem Sockel aufweisen, vorzugsweise wobei die Nanokanäle eine asymmetrische Morphologie vom konischen Typ aufweisen.

9. Verfahren zur Produktion von elektrischer Energie, das eine wie in einem der Ansprüche 1 bis 8 beschriebene Vorrichtung verwendet, umfassend die folgenden Schritte:
i. Versorgen einer Vorrichtung zur Produktion von elektrischer Energie gemäß den folgenden Schritten:
- Geben der Elektrolytlösung mit der Konzentration CA eines gelösten Stoffs (22A) in das Reservoir A (20A), so dass die Elektrode (30A), mit dem es ausgestattet ist, in Kontakt mit der Lösung (22A) ist,
- Geben der Elektrolytlösung mit der Konzentration CB desselben gelösten Stoffs (22B), wobei CB niedriger als CA ist, in das Reservoir B (20B), so dass die Elektrode (30B), mit dem es ausgestattet ist, in Kontakt mit der Lösung (22B) ist, und
- Trennen der zwei Reservoirs A und B durch die Membran (10), umfassend mindestens einen Nanokanal (11), der dazu eingerichtet ist, die Diffusion von Elektrolyten vom Reservoir A zum Reservoir B durch den oder die Nanokanäle zu ermöglichen;
ii. Gewinnen der elektrischen Energie, die durch die Potentialdifferenz erzeugt wird, die zwischen den zwei Elektroden existiert, mithilfe der Vorrichtung (32) .

10. Verfahren nach Anspruch 9, **dadurch gekennzeichnet, dass** die Elektrolytlösungen wässrige Lösungen sind, umfassend einen gelösten Stoff, der aus Alkalihalogeniden oder Erdalkalihalogeniden ausgewählt ist, vorzugsweise aus NaCl, KCl, CaCl₂ und MgCl₂ ausgewählt ist.

11. Verfahren nach Anspruch 10, **dadurch gekennzeichnet, dass** der gelöste Stoff NaCl ist.

12. Verfahren nach einem der Ansprüche 9 bis 11, **dadurch gekennzeichnet, dass** das Verhältnis der Konzentrationen CA/CB größer als 1 und kleiner als oder gleich 10⁹, vorzugsweise größer als 1 und kleiner als oder gleich 10⁵ ist.

13. Verfahren nach einem der Ansprüche 9 bis 12, **dadurch gekennzeichnet, dass** der pH-Wert der Elektrolytlösungen zwischen (pHiso + 1) und 14, insbesondere zwischen (pHiso + 2) und 12 liegt, wobei pHiso der pH-Wert des isoelektrischen Punkts der Membran ist.

14. Verfahren nach einem der Ansprüche 9 bis 12, **dadurch gekennzeichnet, dass** der pH-Wert der Elektrolytlösungen zwischen 0 und (pHiso - 1), insbesondere zwischen 1 und (pHiso - 2) liegt, wobei pHiso der pH-Wert des isoelektrischen Punkts der Membran ist.

15. Verfahren nach einem der Ansprüche 9 bis 14, **dadurch gekennzeichnet, dass** die Differenz der pH-Werte zwischen den zwei Elektrolytlösungen, die in den Reservoirs enthalten sind, größer als 1, insbesondere größer als 2 ist.

## Claims

1. A device for producing electrical energy comprising:
a. a first vessel A (20A) intended to receive an electrolyte solution of concentration CA in a solute (22A) and comprising an electrode (30A) arranged so as to come into contact with the electrolyte solution of concentration CA;
b. a second vessel B (20B) intended to receive an electrolyte solution of concentration CB in the same solute (22B), CB being lower than CA, and comprising an electrode (30B) arranged so as to come into contact with the electrolyte solution of concentration CB;
c. a membrane (10) separating the two vessels, said membrane comprising at least one nanochannel (11) arranged to allow the diffusion of the electrolytes from the vessel A to the vessel B through said one or more nanochannels; and
d. a device (32) making it possible to supply the electrical energy generated by the differential in potential that exists between the two electrodes,
**characterized in that** at least one portion of the inner surface of the one or more nanochannels is essentially made up of at least one titanium oxide and **characterized in that** the nanochannels have an average diameter comprised between 1 and 500 nm allowing to let both water molecules and solute ions circulate.

2. The device according to claim 1, **characterized in that** said titanium oxide is titanium dioxide (TiO₂).

3. The device according to claim 1 or 2, **characterized in that** the titanium oxide is in an amorphous form, in the anatase crystalline form, in the rutile-type crystalline form or in the form of a mixture of these forms, preferably titanium oxide is in the crystalline anatase form.

4. The device according to any one of claims 1 to 3, **characterized in that** the titanium oxide is doped by introducing, at the surface or at the center of its crystal lattice, metallic chemical elements such as iron, silver, vanadium, gold, platinum, tungsten, niobium or non-metallic chemical elements such as nitrogen, sulfur, carbon, hydrogen, boron, phosphorus, or different chemical compounds such as silanes or amines.

5. The device according to any one of claims 1 to 4, **characterized in that** said nanochannels have an average diameter comprised between 10 and 100 nm.

6. The device according to any one of claims 1 to 5, **characterized in that** said nanochannels have a length to average diameter ratio of less than 1000, in particular less than 100.

7. The device according to any one of claims 1 to 6, **characterized in that** the density of nanochannels per membrane unit area is greater than 10⁵ nanochannels per cm² of membrane, in particular greater than 10⁸ nanochannels per cm² of membrane.

8. The device according to any one of claims 1 to 7, **characterized in that** said nanochannels have a morphology which is nanotubular, asymmetric of conical type, neck shaped, or a morphology with perforated base, preferably said nanochannels have a conical-type asymmetric morphology.

9. A method for producing electrical energy using a device as described in any one of claims 1 to 8, comprising the following steps:
i. providing a device for producing electrical energy by following the following steps:
- placing said electrolyte solution of concentration CA in a solute (22A) in the vessel A (20A), so that the electrode (30A) with which it is equipped is in contact with said solution (22A) ,
- placing said electrolyte solution of concentration CB in the same solute (22B), CB being lower than CA, in the vessel B (20B), so that the electrode (30B) with which it is equipped is in contact with said solution (22B), and
- separating the two vessels A and B by said membrane (10) comprising the at least one nanochannel (11) arranged to allow the diffusion of the electrolytes from the vessel A to the vessel B through said one or more nanochannels;
ii. collecting the electrical energy generated by the differential in potential that exists between the two electrodes, using the device (32).

10. The method according to claim 9, **characterized in that** said electrolyte solutions are aqueous solutions comprising a solute selected from alkali metal halides or alkaline-earth halides, preferably selected from NaCl, KCL, CaCl₂ and MgCl₂.

11. The method according to claim 10, **characterized in that** said solute is NaCl.

12. The method according to any one of claims 9 to 11, **characterized in that** the concentration ratio CA/CB is greater than 1 and less than or equal to 10⁹, preferably greater than 1 and less than or equal to 10⁵.

13. The method according to any one of claims 9 to 12, **characterized in that** the pH of said electrolyte solutions is comprised between (pHiso +1) and 14, in particular between (pHiso+2) and 12, pHiso being the pH of the isoelectric point of said membrane.

14. The method according to any one of claims 9 to 12, **characterized in that** the pH of said electrolyte solutions is comprised between 0 and (pHiso-1), in particular between 1 and (pHiso-2), pHiso being the pH of the isoelectric point of said membrane.

15. The method according to any one of claims 9 to 14, **characterized in that** the difference in pH between the two electrolyte solutions contained in the vessels is greater than 1, in particular greater than 2.
